# EUROPÄISCHE PATENTSCHRIFT

(11) **EP 1 486 379 B1**
(45) Veröffentlichungstag und Bekanntmachung des Hinweises auf die Patenterteilung: **05.11.2008**
(21) Anmeldenummer: 04008457.6
(22) Anmeldetag: 07.04.2004
(51) Int. Cl.: B60R 1/07

(54) **Vorrichtung zur Stromversorgung zweier Verbraucherpaare**
Power supply device for two consumer pairs
Dispositif d'alimentation en puissance de deux paires de consommateurs

(30) Priorität: 11.06.2003 DE 10326277
(43) Veröffentlichungstag der Anmeldung: 15.12.2004
(73) Patentinhaber: Robert Seuffer GmbH & Co. KG, 75365 Calw-Hirsau (DE)
(72) Erfinder: Harr, Jürgen, 71159 Mötzingen (DE); Schlecht, Daniel, 75382 Althengstett (DE); Volz, Klaus, 72218 Wildberg (DE)
(74) Vertreter: Eisenführ, Speiser & Partner

(56) Entgegenhaltungen:
- EP-A- 0 400 633
- EP-A- 0 481 335
- US-A- 4 330 694
- US-A- 4 937 402
- US-A- 5 350 891

## Beschreibung

Die Erfindung betrifft eine Vorrichtung zur Stromversorgung zweier Verbraucherpaare, insbesondere zweier Stellmotorpaare nach dem Oberbegriff des Patentanspruches 1.

Es ist beispielsweise aus der Druckschrift DE 43 04 794 A1 bekannt, mit Hilfe eines Stellmotorpaares und zugeordneten Getrieben einen kardanisch gelagerten Außenspiegel eines Kraftfahrzeugs zu bewegen. Sowohl für den rechten Außenspiegel als auch für den linken Außenspiegel wird ein Stellmotor-Paar verwendet. Vor allem in einem Kraftfahrzeug ist es erforderlich, dass der Fahrzeuginsasse die Außenspiegel, welche als Rückspiegel wirken, mittels eines einfach zu betätigenden Einstellmittels in die gewünschten Winkelpositionen zu bringen, wobei die Stellmotore durch geeignete Kontaktgabe mit der Stromversorgungsquelle für die Spiegelbewegung verbunden werden müssen. Diese Problematik ergibt sich auch bei solchen Bauteilen, für welche durch elektrisch betätigte, beispielsweise als Aktuatoren ausgebildete Verbraucher, Stellbewegungen erzeugt werden.

Im Einzelnen zeigt die Druckschrift EP 0 400 633 einen Fernbedienungsschalter zur Einstellung der Position von Spiegeln an einem Kraftfahrzeug, wobei in der Art eines Joysticks eine Betätigungseinrichtung vorgesehen ist, die ein Schalterelement aufweist zum Schließen einer Vielzahl von Kontakten in entsprechender Weise in Abhängigkeit von einer manuellen Betätigung. Auf einem isolierenden Träger ist die Vielzahl der Kontakte flächig ausgebildet, und es werden in Abhängigkeit von der Bewegung Stromversorgungskontakte, die beispielsweise mit einer Kraftfahrzeugbatterie verbunden sind, mit in den Spiegeln des Fahrzeugs angeordneten Elektromotoren zum Betreiben der Elektromotoren und zur Verstellung der Spiegelposition verbunden. Die mechanische Anordnung gemäß dem Joystick ermöglicht ein Drehen des Schalterelements sowie ein Verschieben innerhalb der Ebene der Kontaktanordnung, um jeweils in der einen oder anderen Richtung die gewünschte Verstellung zu bewirken. Die Anordnung der Kontakte auf dem Kontaktträger ist in Form von Streifen oder unregelmäßig ausgebildeten Flächenkontakten vorgesehen.

Die Druckschrift EP 0 481 335 offenbart eine Schaltvorrichtung mit einer Kontaktanordnung zum selektiven Aktivieren mehrerer Verbraucheranordnungen, wobei ein mechanisch bewegliches Betätigungsorgan in funktionsmäßig verschiedene Positionen verstellt werden kann, sodass der jeweiligen Verbraucheranordnung zugeordnete Kontakte in entsprechender Weise aktiviert werden. Hierbei werden die der jeweiligen Verbraucheranordnung zugeordneten Kontakte mit zentralen Stromversorgungskontakten (Spannung einer Kraftfahrzeugbatterie) verbunden. Die Kontaktanordnung besteht aus flächig auf einer isolierenden Platte angeordneten feststehenden Kontakten, die mit Betätigungsgliedern, beispielsweise Elektromotoren, der jeweiligen Verbraucheranordnungen verbunden sind. In Abhängigkeit von der jeweiligen Stellung des mechanisch beweglichen Betätigungsorgan können verschiedene Kontakte elektrisch geschlossen werden, sodass in gewünschter Weise den Betätigungsgliedern oder Elektromotoren gezielt für eine Verstellung in die eine oder andere Richtung elektrische Energie zugeführt wird. Insbesondere ist das Betätigungsorgan über die flächig ausgebildete Kontaktanordnung verschiebbar, während weitere bewegliche Kontakte ständig mit dem Betätigungsorgan verbunden sind.

Die Druckschrift US 4 937 402 offenbart eine Schalteinrichtung, mittels der beispielsweise die Position und Anordnung eines Spiegels eines Kraftfahrzeugs verstellt werden kann. Hierbei wird ein Betätigungsorgan, das mechanisch in Abhängigkeit von einer manuellen Betätigung beweglich ist, auf einer flächig ausgebildeten Kontaktanordnung verschoben, um gezielt bestimmte Kontakte miteinander oder mit einer zentralen Stromversorgung zu verbinden und in die eine oder andere Richtung eine Verstellung des Kraftfahrzeugspiegels zu bewirken. Hierbei sind insbesondere feststehende Kontakte in einer Längsrichtung angeordnet, wobei die Aktivierung durch Verschieben eines manuell verstellbaren Betätigungselements erfolgt.

Der vorliegenden Erfindung liegt demgegenüber die Aufgabe zugrunde, eine Vorrichtung der eingangs genannten Art derart auszugestalten, dass die Zuordnung ortsfester, mit den Verbrauchern, insbesondere Stellmotoren, verbundener Verbraucherkontakte zu beweglichen Kontakten durch eine einfache Bedienung mittels eines Betätigungsteils gewährleistet ist.

Erfindungsgemäß wird diese Aufgabe durch eine Vorrichtung zur Stromversorgung zweier Verbraucherpaare mit den im Patentanspruch 1 angegebenen Merkmalen gelöst.

Bei der Erfindung ist die Anordnung der beweglichen Kontaktpaare am Kontaktträger und der ortsfesten, mit den Verbraucherpaaren, insbesondere elektrischen Stellmotorpaaren, verbundenen Verbraucherkontakte sowie der ortsfesten Anordnung der mit der Stromversorgungsquelle verbundenen Polkontakte derart, dass beim Verstellen auf der Kontaktträger nur eine Drehbewegung und eine Verschiebebewegung, vorzugsweise in zwei zueinander senkrechten Richtungen ausführen muss. Ferner können die ortsfesten Polkontakte und Verbraucherkontakte in einer Ebene, vorzugsweise als elektrisch leitfähige Schichten, auf einer gedruckten Leiterplatte angeordnet werden.

An dem Kontaktträger sind hierzu zwei bewegliche Kontaktpaare angeordnet. Der Kontaktträger ist drehbar und verschiebbar. Insbesondere ist der Kontaktträger linear in zwei senkrecht zueinander liegenden Richtungen hin und her verschiebbar. Die beiden Kontakte eines jeden beweglichen Kontaktpaares sind mit einem elektrischen Leiter verbunden. Der Kontaktträger kann in verschiedene Drehwinkelpositionen, insbesondere zwei Drehwinkelpositionen, von denen jede Drehwinkelposition einem zu verstellenden Bauteil, insbesondere einem Außenspiegel eines Kraftfahrzeugs zugeordnet ist, gedreht werden. Beim Verstellen des Kontaktträgers von einer Winkelposition in die andere Winkelposition werden die beweglichen Kontaktpaare in die Nähe von mit den Plus- und Minuspolen der Stromversorgungsquelle verbundenen Polkontakten sowie in die Nähe der ortsfesten Verbraucherkontakte bewegt. Nach der jeweiligen Drehbewegung befinden sich die beweglichen Kontaktpaare an gegenüber den Verbraucherkontakten und Polkontakten elektrisch isolierten Positionen. Diese Positionen können auch Ruhe- oder Ausgangspositionen definieren. Durch eine vorzugsweise geradlinige Verschiebebewegung unter Beibehaltung der Drehwinkelstellung des Kontaktträgers werden die beweglichen Kontaktpaare mit den Polkontakten und den Verbraucherkontakten eines bestimmten Verbraucherpaares, insbesondere Elektromotor-Paares elektrisch kontaktiert. Die geradlinigen Bewegungen können ausgehend von der jeweiligen Ruhe- oder Ausgangsposition, d. h. nach dem Drehen des Kontaktträgers, in zwei entgegengesetzten Richtungen und zwei dazu senkrecht liegenden entgegengesetzten Richtungen linear bewegt werden.

Die Polkontakte und die Verbraucherkontakte sind vorzugsweise auf Kreisringflächen angeordnet. Der jeweilige mittlere Bereich der Kreisringflächen, auf denen diese ortsfesten Kontakte liegen, wird von einem elektrischen Isolator gebildet. Es kann sich hier beispielsweise um die elektrisch isolierte Oberfläche einer gedruckten Leiterplatte, auf welcher die ortsfesten Kontakte angeordnet sind, handeln. Wenn die beweglichen Kontakte auf den mittleren, elektrisch isolierten Bereichen der jeweiligen, mit den ortsfesten Kontakten bestückten Kreisringflächen liegen, kann die Ausgangsposition oder Ruheposition oder auch Endposition für das zu verstellende Bauteil, insbesondere den zu verstellenden Außenspiegel definiert sein.

Vorzugsweise sind die jeweiligen, mit den Verbrauchern, insbesondere elektrischen Stellmotoren verbundenen Verbraucherkontakte in mehrere Kontaktsegmente unterteilt. Die jeweiligen Kontaktsegmente entsprechen bestimmten Stellbewegungsrichtungen für die Verstellung der Bauteile, insbesondere der Außenspiegel bzw. Rückspiegel am Fahrzeug.

Die Polkontakte sind vorzugsweise als durchgehend mit elektrischem Kontaktierungsmaterial belegte Kreisringflächen ausgebildet.

Die am Kontaktträger vorgesehenen beweglichen Kontakte sind vorzugsweise als Schleifkontakte ausgebildet.

Der Kontaktträger kann mit einem Betätigungsknopf oder Betätigungshebel oder gleichwirkendem Bedien- oder Betätigungselement verbunden sein. Mit dem Betätigungs- oder Bedienelement werden die entsprechenden Bewegungen (Drehung und lineare Verschiebung) auf den Kontaktträger übertragen werden. Die Bewegungen (Drehung, Verschiebung) des Kontaktträgers finden vorteilhafter in einer Ebene statt.

Anhand der Figuren wird an einem Ausführungsbeispiel die Erfindung noch näher erläutert.

Es zeigt
- Fig. 1: eine schematische Darstellung des Ausführungsbeispiel in einer Ruheposition für einen der beiden Außenspiegel eines Fahrzeugs;
- Fig. 2: das Ausführungsbeispiel in einer Betriebsstellung zum Verstellen des einen Außenspiegels;
- Fig. 3: eine Darstellung der Ruheposition, welche dem anderen Außenspiegel zugeordnet ist; und
- Fig. 4: eine Betriebsstellung beim Verstellen des anderen Außenspiegels.

Das Ausführungsbeispiel kommt vorzugsweise zur Stromversorgung von zwei Stellmotor-Paaren zur Anwendung, mit denen Außenspiegel bzw. Rückspiegel an einem Kraftfahrzeug verstellt werden. Mit der dargestellten Kontaktanordnung können zwei verschiedene Spiegel, beispielsweise der rechte und linke Außenspiegel des Kraftfahrzeugs separat verstellt werden.

Auf einer gedruckten Leiterplatte sind ortsfest zwei Polkontakte 1, 2 in Form von elektrisch leitfähigen Schichten angeordnet. Der Polkontakt 1 ist mit einem Pluspol einer elektrischen Stromversorgungsquelle 23, welche als Gleichstromquelle, beispielsweise als Fahrzeugbatterie ausgebildet ist, verbunden. Der zweite Polkontakt 2 ist mit dem Minuspol der Stromversorgungsquelle 23 verbunden. Die beiden Polkontakte 1, 2 sind kreisringförmig ausgebildet, wobei die Kreisringflächen vollständig mit elektrisch leitendem Material beschichtet sind. Die Polung kann auch umgekehrt sein, wobei der erste Polkontakt 1 mit dem Minuspol und der zweite Polkontakt 2 mit dem Pluspol verbunden sind.

Verbraucherkontakte 3, 4, 5 und 6 sind um den ersten Polkontakt 1 angeordnet. Die elektrisch leitenden Schichten der Verbraucherkontakte 3, 4, 5 und 6 befinden sich ebenfalls auf Kreisringflächen. Jeder Verbraucherkontakt 3, 4, 5 und 6 ist in drei Kreisringsegmente unterteilt. Diese Kontaktsegmente sind für die Verbraucherkontakte 3 und 4 mit a, b, d und für die Verbraucherkontakte 5, 6 mit c, d, e bezeichnet. Alle jeweiligen Kontaktsegmente a, b, c, d, e sind elektrisch miteinander verbunden bzw. kurzgeschlossen, wie aus den Figuren zu ersehen ist. Die Mitten der Verbraucherkontakte 3, 4, 5 und 6 und die Mitte des zweiten Polkontaktes 2 befinden sich auf einem Kreis um den Mittelpunkt des Polkontaktes 1.

Um diesen Mittelpunkt des Polkontaktes 1 ist ein Kontaktträger 7 drehbar gelagert. Der Kontaktträger 7 kann kreisrund ausgebildet sein. Er kann jedoch auch eine andere beliebige geeignete Form aufweisen. Am Kontaktträger 7 sind bewegliche Kontaktpaare 10, 11 und 12, 13 befestigt. Die beweglichen Kontakte 10, 11 des ersten Kontaktpaares sind über einen elektrischen Leiter 8 und die beweglichen Kontakte 12, 13 des zweiten Kontaktpaares sind über einen elektrischen Leiter 9 miteinander verbunden. Die beweglichen Kontakte 10, 11, 12, 13 sind vorzugsweise als Schleifkontakte ausgebildet. Die beweglichen Kontakte 10, 11, 12 und 13 können paarweise mit Hilfe nicht näher dargestellter Blattfedern, welche am Kontaktträger 7 abgestützt sind, in Richtung auf die ortsfesten Polkontakte 1, 2 und die ortsfesten Verbraucherkontakte 3, 4, 5 und 6 gedrückt werden. Die elektrischen Leiter 8 und 9 wirken als Verbindungsleiter oder Überbrückungsleiter, die nur mit dem zugeordneten Kontaktpaar 10, 11 und 12, 13 verbunden sind.

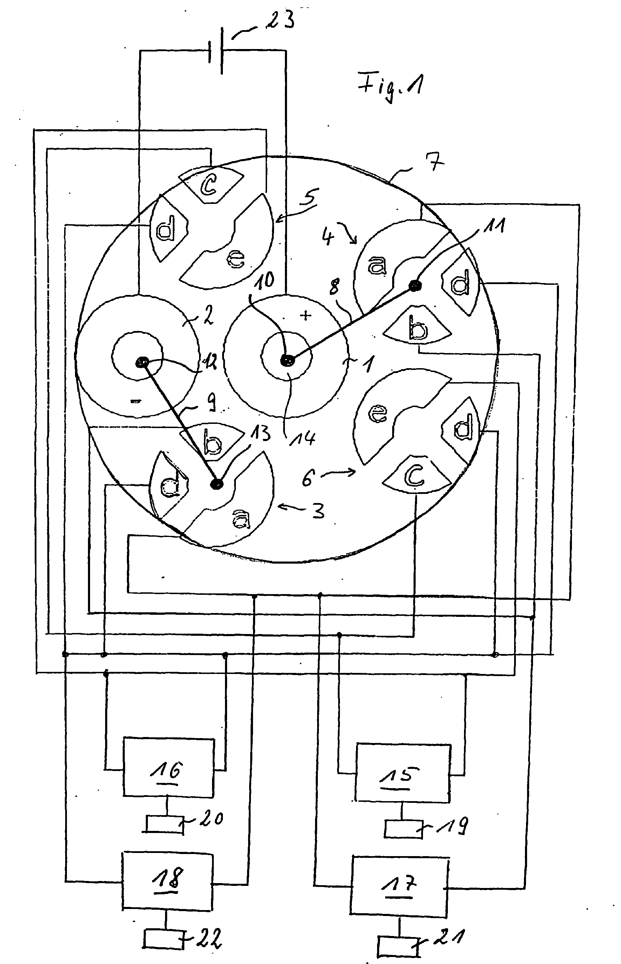

In der Fig. 1 ist die Ausgangsposition oder Ruheposition der am Kontaktträger 7 befestigten Kontaktpaare 10, 11 und 12, 13 dargestellt, von welcher ausgehend ein Stellmotorpaar 17, 18, mit welchem einer der beiden Außenspiegel verstellt wird, zur Erzeugung einer bestimmten Stellbewegung angesteuert werden kann. In der dargestellten Ausgangs- bzw. Ruheposition befinden sich die beweglichen Kontakte 10, 11 an elektrischen Isolatoren 14 in der Mitte des Polkontaktes 1 und des Verbraucherkontaktes 4. Die beweglichen Kontakte 12 und 13 befinden sich auf den elektrischen Isolatoren 14 in den Mitten des Polkontaktes 2 und des Verbraucherkontaktes 3. Die elektrischen Isolatoren 14 werden vorzugsweise von der elektrischen Isolationsschicht auf einer gedruckten Leiterplatte, auf welcher die Kontaktanordnung vorgesehen ist, gebildet.

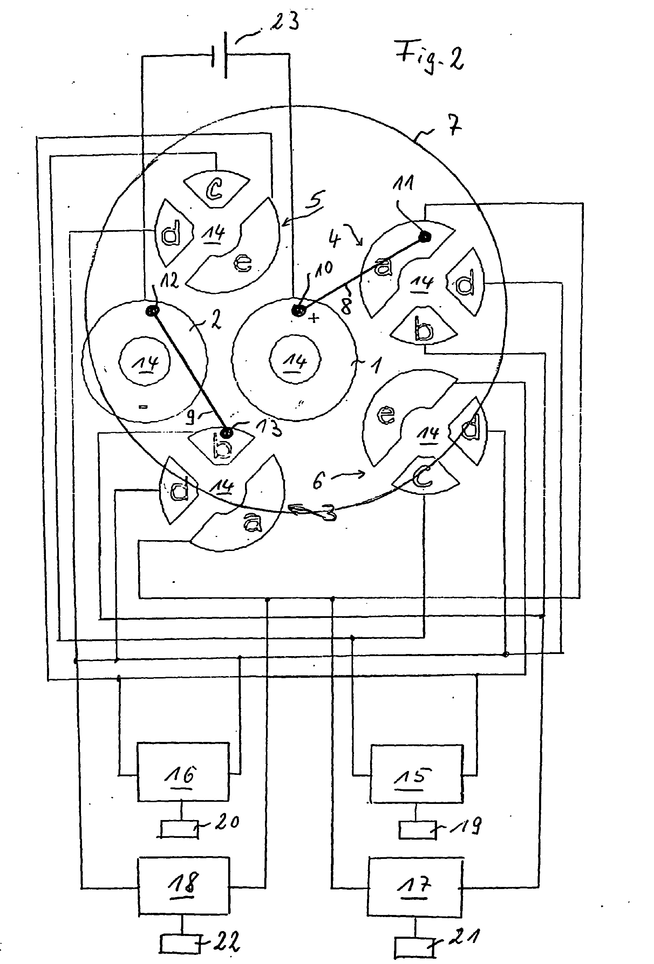

Aus der in der Fig. 1 dargestellten Ausgangs- bzw. Ruheposition werden die beweglichen Kontaktpaare 10, 11 und 12, 13 durch lineare Verschiebung des Kontaktträgers 7, beispielsweise in einer vertikalen Richtung in der Figur nach oben, in die in der Fig. 2 dargestellten Position verschoben. Hierbei wird der an Pluspotential liegende Polkontakt 1 über das Kontaktpaar 10, 11 und den elektrischen Leiter 8 mit dem Kontaktsegment a des Verbraucherkontaktes 4 verbunden. Ferner wird durch das Kontaktpaar 12, 13 und den elektrischen Leiter 9 der an Minuspotential liegende Polkontakt 2 mit dem Kontaktsegment b des Verbraucherkontaktes 3 verbunden. Durch diese Verschiebung des Kontaktträgers 7 wird der Stellmotor 17 in den Versorgungsstromkreis der Stromversorgungsquelle 23 gelegt. Die vom Stellmotor 17 erzeugte Stellbewegung wird mittels eines zugeordneten Stellgetriebes 21 auf den Spiegel übertragen. Aus den Fig. 1 und 2 ist ferner zu ersehen, dass durch eine Verschiebung des Kontaktträgers 7 vertikal nach unten durch das Polpaar 10, 11 und den Leiter 8 der Polkontakt 1 mit dem Kontaktsegment b des Verbraucherkontaktes 4 und durch das Kontaktpaar 12, 13 und den Leiter 9 der Polkontakt 2 mit dem Kontaktsegment a des Verbraucherkontaktes 3 verbunden werden. Hierdurch wird ebenfalls der Stellmotor 17 für eine entgegengesetzte Stellbewegungsrichtung an die Stromversorgungsquelle 23 angeschlossen. In gleicher Weise können durch horizontale Bewegungen des Kontaktträgers 7 aus der in der Fig. 1 dargestellten Ausgangs- bzw. Ruheposition nach links oder nach rechts in horizontaler Richtung entsprechende Kontaktsegmente der Verbraucherkontakte 4 und 3 mit den Polkontakten 1, 2 verbunden werden, wobei ein Stellmotor 18 mit zugeordneten Stellgetriebe 22 in den Stromkreis der Stromversorgungsquelle 23 geschaltet wird. In Abhängigkeit von den entsprechend kontaktierten Kontaktsegmenten der Verbraucherkontakte 3, 4 werden die Stellmotore 17, 18 in entsprechende Stellrichtungen angesteuert. Hierdurch lässt sich die gewünschte Einstellung des einen Außenspiegels, welcher von den Stellmotoren 17, 18 und den dazugehörigen Stellgetrieben 21, 22 verstellt wird, einstellen.

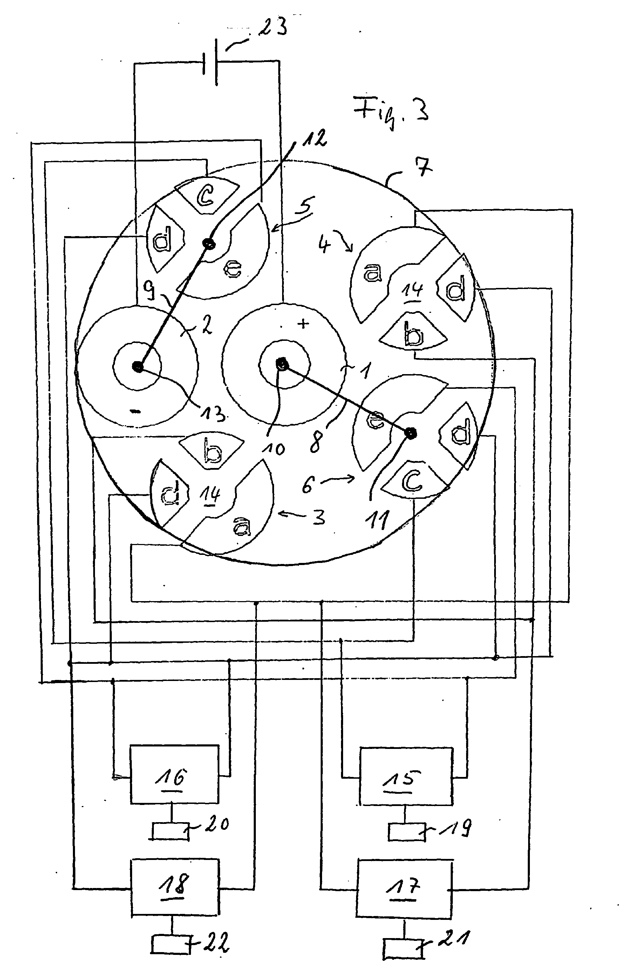

Beim Verdrehen des Kontaktträgers 7 aus der in der Fig. 1 dargestellten Position um etwa 60° in die in der Fig. 3 dargestellte Position erreicht man die Ausgangs- bzw. Ruheposition der Kontaktpaare 10, 11 und 12, 13, von welcher ausgehend ein Stellmotorpaar 15, 16, mit welchem der andere der beiden Außenspiegel verstellt wird, zur Erzeugung einer bestimmten Stellbewegung angesteuert werden kann.

Zur Erzeugung der entsprechenden Stellbewegung kann, wie bei der Erläuterung der Fig. 1 und 2 der Kontaktträger senkrecht nach oben oder nach unten oder horizontal nach links oder nach rechts aus der in der Fig. 3 dargestellten Position bewegt werden. Durch diese linearen Verschiebebewegungen werden die Kontaktpaare 10, 11 und 12, 13 mit entsprechenden Kontaktsegmenten der Verbraucherkontakte 5 und 6 elektrisch kontaktiert. Hierdurch wird das Stellmotorpaar 15, 16 in den Versorgungsstromkreis der Versorgungsstromquelle 23 gebracht. Ferner werden in Abhängigkeit von den jeweils mit den Polkontakten 1 und 2 verbundenen Kontaktsegmenten entsprechende Stellbewegungen der beiden Stellmotore 15, 16 und der zugeordneten Stellgetriebe 19 und 20 erzeugt. Auf diese Weise wird der andere Außenspiegel in die gewünschte Position gebracht.

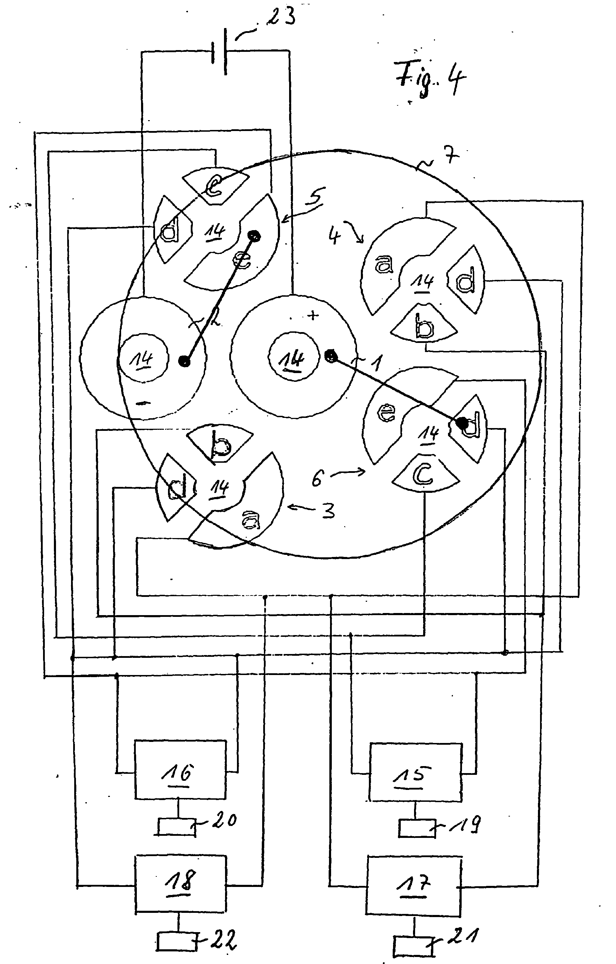

Bei der in der Fig. 4 dargestellten Position des Kontaktträgers 7 ist dieser in horizontaler Richtung aus der in Fig. 3 dargestellten Position nach rechts bewegt worden. Hierdurch wird der Polkontakt 1 mit dem Kontaktsegment d des Verbraucherkontaktes 6 und der Polkontakt 2 mit dem Kontaktsegment e des Verbraucherkontaktes 5 verbunden. Dabei wird der Stellmotor 16 in den Stromkreis der Versorgungsstromquelle 23 zur Erzeugung einer Stellbewegung in einer bestimmten Richtung geschaltet. Beim horizontalen Verschieben des Kontaktträgers 7 in die andere Richtung werden der Polkontakt 1 mit dem Kontaktsegment e mit dem Kontaktsegment e des Verbraucherkontaktes 6 und der Polkontakt 2 mit dem Kontaktsegment d des Verbraucherkontaktes 5 verbunden. Hierdurch wird ebenfalls der Stellmotor 16 in den Stromkreis der Verbraucherstromquelle mit entgegengesetzter Stellbewegungsrichtung geschaltet. Beispielsweise können hierdurch horizontale Schwenkbewegungen des Spiegels, d.h. Schwenkbewegungen des Spiegels um eine vertikale Achse erzeugt werden.

Beim Verschieben des Kontaktträgers 7 aus der in der Fig. 3 dargestellten Position in die beiden senkrechten Richtungen wird der Stellmotor 15 mit dem zugeordneten Stellgetriebe 19 zur Erzeugung entsprechender Stellbewegungen in entgegengesetzten Richtungen, beispielsweise zum Verschwenken des Spiegels um eine horizontale Achse geschaltet.

Mit der beschriebenen Kontaktanordnung kann ein Schaltprogramm in einer Schaltebene für zwei Stellmotorpaare, mit denen beispielsweise zwei Außenspiegel eines Kraftfahrzeugs verstellt werden, umgesetzt werden. Die in einer Ebene erfolgenden Bewegungen des Kontaktträgers 7 können in einfacher Weise durch ein starr oder gelenkig mit ihm verbundenes Bedienelement, beispielsweise in Form eines Dreh-/Schiebeknopfes, Bedienhebels und dergleichen erzeugt werden. Durch Drehen des Kontaktträgers 7, z.B. in einem Drehwinkel von etwa 60°, kann zwischen den Verbraucherkontakten, welche den Stellmotorpaaren zweier Außenspiegel eines Fahrzeugs zugeordnet sind, gewechselt werden, so dass mit demselben Betätigungselement sowohl der linke als auch der rechte Außenspiegel des Fahrzeugs bedient werden können. Durch Verschieben des Kontaktträgers bzw. des damit verbundenen Betätigungselementes, vorzugsweise in zwei zueinander senkrechten Richtungen können die entsprechenden Stellmotore in jeweils entgegengesetzten Richtungen Stellbewegungen erzeugen. Dabei kann ein Stellmotor Stellbewegungen des Spiegels um eine vertikale Achse und der andere Stellmotor Stellbewegungen des Spiegels um eine horizontale Achse bewirken.

### [Bezugszeichenliste]

- 1: Polkontakt (Pluspol)
- 2: Polkontakt (Minuspol)
- 3: Verbraucherkontakt
- 4: Verbraucherkontakt
- 5: Verbraucherkontakt
- 6: Verbraucherkontakt
- 7: Kontaktträger
- 8: elektrischer Leiter
- 9: elektrischer Leiter
- 10: beweglicher Kontakt
- 11: beweglicher Kontakt
- 12: beweglicher Kontakt
- 13: beweglicher Kontakt
- 14: elektrischer Isolator
- 15, 16: Stellmotorpaar für ersten Spiegel
- 17, 18: Stellmotorpaar für zweiten Spiegel
- 19, 20: Stellgetriebepaar für ersten Spiegel
- 21, 22: Stellgetriebepaar für zweiten Spiegel
- 23: Stromversorgungsquelle

## Patentansprüche

1. Vorrichtung zur Stromversorgung zweier Verbraucherpaare, insbesondere elektrischer Stellmotorpaare, mit
mehreren mit den Verbraucherpaaren verbundenen ortsfesten Verbraucherkontakten, welche mit Hilfe beweglicher Kontakte zur wahlweisen Stromversorgung der Verbraucherpaare an Plus- und Minuspolen einer Stromversorgungsquelle anschließbar sind, wobei
zwei bewegliche Kontaktpaare (10, 11 und 12, 13) an einem dreh- und verschiebbaren Kontaktträger (7) angeordnet sind,
die Kontakte jedes beweglichen Kontaktpaares (10, 11 und 12, 13) mit einem elektrischen Leiter (8, 9) verbunden sind,
in einer jeweiligen Drehwinkelposition des Kontaktträgers (7) die einen Kontakte der beiden beweglichen Kontaktpaare (10, 11 und 12, 13) in die Nähe von mit den Plus- und Minuspolen der Stromversorgungsquelle (23) verbundenen Polkontakten (1, 2) und die anderen Kontakte der beiden Kontaktpaare (10, 11 und 12, 13) in die Nähe der ortsfesten Verbraucherkontakte (3, 4 oder 5, 6) eines der beiden Verbraucherpaare bewegbar sind,
die beweglichen Kontaktpaare (10, 11 und 12, 13) durch Verschieben des Kontaktträgers (7) mit den Polkontakten (1, 2) und den Verbraucherkontakten (3, 4 oder 5, 6) des einen Verbraucherpaares elektrisch kontaktiert sind, **dadurch gekennzeichnet, dass**
die Polkontakte (1, 2) und die Verbräucherkontakte (3, 4, 5, 6) auf Kreisringflächen angeordnet sind, und
die Mitten der Verbraucherkontakte (3, 4, 5, 6) und eines der beiden Polkontakte (1, 2) auf einem Kreisumfang liegen,
und die Mitte des anderen Polkontakts dem Mittelpunkt des Kreisumfangs entspricht.

2. Vorrichtung nach Anspruch 1, **dadurch gekennzeichnet, dass** die mittleren Bereiche der Kreisringflächen, in denen die ortsfesten Kontakte (1 bis 6) angeordnet sind, von einem elektrischen Isolator (14) ausgebildet sind.

3. Vorrichtung nach einem der Ansprüche 1 bis 2, **dadurch gekennzeichnet, dass** bei der Anordnung der beweglichen Kontaktpaare (10, 11 und 12, 13) in den mittleren Bereichen der Kreisringflächen, auf denen die ortsfesten Kontakte (1 bis 6) angeordnet sind, eine Ruheposition definiert ist.

4. Vorrichtung nach einem der Ansprüche 1 bis 3, **dadurch gekennzeichnet, dass** der jeweilige Verbraucherkontakt (3, 4, 5, 6) aus mehreren mit dem jeweiligen Verbraucher verbundenen Kontaktsegmenten (a, b, c, d, e) besteht.

5. Vorrichtung nach einem der Ansprüche 1 bis 4, **dadurch gekennzeichnet, dass** die Polkontakte (1, 2) als durchgehend mit einer leitfähigen Schicht versehene Kreisringflächen ausgebildet sind.

6. Vorrichtung nach einem der Ansprüche 1 bis 5, **dadurch gekennzeichnet, dass** in Abhängigkeit von der Verschieberichtung des Kontaktträgers (7) bestimmte Kontaktsegmente (a, b, c, d, e) mit den Polkontakten (1, 2) über die beiden elektrischen Leiter (8, 9) verbunden sind.

7. Vorrichtung nach einem der Ansprüche 1 bis 6, **dadurch gekennzeichnet, dass** die Verbraucherpaare Elektromotorpaare (15, 16 und 17, 18) sind.

8. Vorrichtung nach Anspruch 7, **dadurch gekennzeichnet, dass** jedes Elektromotorpaar (15, 16 und 17, 18) zur Verstellung eines Außenspiegels eines Kraftfahrzeugs ausgebildet ist.

9. Vorrichtung nach einem der Ansprüche 1 bis 7, **dadurch gekennzeichnet, dass** die Kontaktsegmente (a, b, c, d, e) der Verbraucherkontakte (3, 4, 5, 6) bestimmten Verstellbewegungen, welche das jeweilige Elektromotorpaar (15, 16 und 17, 18) erzeugt, zugeordnet sind.

10. Vorrichtung nach einem der Ansprüche 1 bis 9, **dadurch gekennzeichnet, dass** der Kontaktträger (7) um den Mittelpunkt des Pluspotential oder Minuspotential aufweisenden Polkontaktes (1) drehbar ist, wobei bei der Drehung des Kontaktträgers (7) ein beweglicher Kontakt (10) des einen Kontaktpaares (10, 11) auf dem in der Mitte dieses Polkontaktes (1) liegenden elektrischen Isolator (14) aufliegt.

11. Vorrichtung nach einem der Ansprüche 1 bis 10, **dadurch gekennzeichnet, dass** die beweglichen Kontakte (10, 11, 12, 13) als Schleifkontakte ausgebildet sind.

12. Vorrichtung nach einem der Ansprüche 1 bis 11, **dadurch gekennzeichnet, dass** die ortsfesten Kontakte (1 bis 6) in einer Ebene, insbesondere auf einer gedruckten Leiterplatte angeordnet sind.

13. Vorrichtung nach einem der Ansprüche 1 bis 12, **dadurch gekennzeichnet, dass** beim Wechsel zwischen den Verbraucherkontakten (3, 4 und 5, 6) der beiden Verbraucherpaare der Kontaktträger (7) um etwa 60° gedreht wird.

14. Vorrichtung nach einem der Ansprüche 1 bis 13, **dadurch gekennzeichnet, dass** der Kontaktträger in der jeweiligen Drehwinkelposition in zwei zueinander senkrechten Richtungen verschiebbar ist.

## Claims

1. Apparatus for the power supply of two pairs of consumers, in particular pairs of electric control motors, comprising
a plurality of stationary consumer contacts which are connected to the pairs of consumers and which can be connected to positive and negative poles of a power supply source by means of movable contacts for selective power supply to the pairs of consumers, wherein
two movable pairs of contacts (10, 11 and 12, 13) are arranged on a rotatable and displaceable contact carrier (7),
the contacts of each movable pair of contacts (10, 11 and 12, 13) are connected to an electric conductor (8, 9),
in a respective rotary angular position of the contact carrier (7) the one contacts of the two movable pairs of contacts (10, 11 and 12, 13) are movable into the proximity of pole contacts (1, 2) connected to the positive and negative poles of the power supply source (23) and the other contacts of the two pairs of contacts (10, 11 and 12, 13) are movable into the proximity of the stationary consumer contacts (3, 4 or 5, 6) of one of the two pairs of consumers, and
the movable pairs of contacts (10, 11 and 12, 13) are electrically contacted by displacement of the contact carrier (7) with the pole contacts (1, 2) and the consumer contacts (3, 4 or 5, 6) of the one pair of consumers, **characterised in that**
the pole contacts (1, 2) and the consumer contacts (3, 4, 5, 6) are arranged on circular ring surfaces, and
the centres of the consumer contacts (3, 4, 5, 6) and one of the two pole contacts (1, 2) are disposed on a circular circumference,
and the centre of the other pole contact corresponds to the centre point of the circular circumference.

2. Apparatus according to claim 1 **characterised in that** the central regions of the circular ring surfaces in which the stationary contacts (1 to 6) are arranged are formed by an electrical insulator (14).

3. Apparatus according to one of claims 1 and 2 **characterised in that** a rest position is defined with the arrangement of the movable pairs of contacts (10, 11 and 12, 13) in the central regions of the circular ring surfaces on which the stationary contacts (1 to 6) are arranged.

4. Apparatus according to one of claims 1 to 3 **characterised in that** the respective consumer contact (3, 4, 5, 6) comprises a plurality of contact segments (a, b, c, d, e) connected to the respective consumer.

5. Apparatus according to one of claims 1 to 4 **characterised in that** the pole contacts (1, 2) are in the form of circular ring surfaces continuously provided with a conductive layer.

6. Apparatus according to one of claims 1 to 5 **characterised in that** given contact segments (a, b, c, d, e) are connected to the pole contacts (1, 2) by way of the two electric conductors (8, 9) in dependence on the direction of displacement of the contact carrier (7).

7. Apparatus according to one of claims 1 to 6 **characterised in that** the pairs of consumers are pairs of electric motors (15, 16, 17).

8. Apparatus according to claim 7 **characterised in that** each pair of electric motors (15, 16 and 17, 18) is adapted for displacement of an exterior mirror of a motor vehicle.

9. Apparatus according to one of claims 1 to 7 **characterised in that** the contact segments (a, b, c, d, e) of the consumer contacts (3, 4, 5, 6) are associated with given displacement movements which the respective pair of electric motors (15, 16 and 17, 18) produces.

10. Apparatus according to one of claims 1 to 9 **characterised in that** the contact carrier (7) is rotatable about the centre point of the pole contact (1) having positive potential or negative potential, wherein upon the rotary movement of the contact carrier (7) a movable contact (10) of the one pair of contacts (11, 12) bears on an electrical insulator (14) disposed in the centre of said pole contact (1).

11. Apparatus according to one of claims 1 to 10 **characterised in that** the movable contacts (10, 11, 12, 13) are in the form of sliding contacts.

12. Apparatus according to one of claims 1 to 11 **characterised in that** the stationary contacts (1 to 6) are arranged in a plane, in particular on a printed circuit board.

13. Apparatus according to one of claims 1 to 12 **characterised in that** the contact carrier (7) is rotated through about 60° upon a change between the consumer contacts (3, 4 and 5, 6) of the two pairs of consumer contacts.

14. Apparatus according to one of claims 1 to 13 **characterised in that** the contact carrier is displaceable in two mutually perpendicular directions in the respective rotary angular position.

## Revendications

1. Dispositif pour l'alimentation en courant de deux paires de consommateurs, en particulier de paires de servomoteurs électriques, comprenant
plusieurs contacts de consommateurs fixes reliés aux paires de consommateurs, lesquels contacts sont raccordables aux pôles positifs et négatifs d'une source d'alimentation en courant à l'aide de contacts mobiles pour l'alimentation en courant sélective des paires de consommateurs,
deux paires de contacts mobiles (10, 11 et 12, 13) étant disposées sur un porte-contacts (7) coulissant et tournant,
les contacts de chaque paire de contacts mobile (10, 11 et 12, 13) étant reliés à un conducteur électrique (8, 9),
dans une position d'angle de rotation respective du porte-contacts (7), les uns des contacts des deux paires de contacts mobiles (10, 11 et 12, 13) sont coulissantes au voisinage de contacts polaires (1, 2) reliés aux pôles positifs et négatifs de la source d'alimentation en courant (23), et les autres contacts des deux paires de contacts (10, 11 et 12, 13) sont coulissantes au voisinage des contacts de consommateurs fixes (3, 4 ou 5, 6) de l'une des deux paires de consommateurs,
les paires de contacts mobiles (10, 11 et 12, 13) étant mises en contact électrique avec les contacts polaires (1, 2) et les contacts de consommateurs (3, 4 ou 5, 6) de l'une des paires de consommateurs par coulissement du porte-contacts (7).
**caractérisé en ce que**
les contacts polaires (1, 2) et les contacts de consommateurs (3, 4, 5, 6) sont disposés sur des surfaces toriques, et
les centres des contacts de consommateurs (3, 4, 5, 6) et de l'un des deux contacts polaires (1, 2) se situent sur une circonférence circulaire,
et le centre de l'autre contact polaire correspond au centre de la circonférence circulaire.

2. Dispositif suivant la revendication 1, **caractérisé en ce que** les zones centrales des surfaces toriques, dans lesquelles sont disposés les contacts fixes (1 à 6), sont réalisées par un isolateur électrique (14).

3. Dispositif suivant l'une des revendications 1 à 2, **caractérisé en ce qu'**une position de repos est définie lors de l'agencement des paires de contacts mobiles (10, 11 et 12, 13) dans les zones centrales des surfaces toriques, sur lesquelles sont disposés les contacts fixes (1 à 6).

4. Dispositif suivant l'une des revendications 1 à 3, **caractérisé en ce que** le contact de consommateur respectif (3, 4, 5, 6) est constitué de plusieurs segments de contacts (a, b, c, d, e) reliés au consommateur respectif.

5. Dispositif suivant l'une des revendications 1 à 4, **caractérisé en ce que** les contacts polaires (1, 2) sont réalisés sous forme de surfaces toriques munies en continu d'une couche conductrice.

6. Dispositif suivant l'une des revendications 1 à 5, **caractérisé en ce que,** en fonction de la direction de déplacement du porte-contacts (7), des segments de contacts définis (a, b, c, d, e) sont reliés aux contacts polaires (1, 2) par l'intermédiaire des deux conducteurs électriques (8, 9).

7. Dispositif suivant l'une des revendications 1 à 6, **caractérisé en ce que** les paires de consommateurs sont des paires de moteurs électriques (15, 16 et 17, 18).

8. Dispositif suivant la revendication 7, **caractérisé en ce que** chaque paire de moteurs électriques (15, 16 et 17, 18) est réalisée pour le réglage d'un rétroviseur d'un véhicule automobile.

9. Dispositif suivant l'une des revendications 1 à 7, **caractérisé en ce que** les segments de contacts (a, b, c, d, e) des contacts de consommateurs (3, 4, 5, 6) sont associés à des mouvements de réglage définis, produits par la paire de moteurs électriques respective (15, 16 et 17, 18).

10. Dispositif suivant l'une des revendications 1 à 9, **caractérisé en ce que** le porte-contacts (7) peut tourner autour du centre du contact polaire (1) présentant le potentiel positif ou le potentiel négatif, un contact mobile (10) de l'une des paires de contacts (10, 11) s'appliquant sur l'isolateur électrique (14) situé au centre de ce contact polaire (1) lors de la rotation du porte-contacts (7).

11. Dispositif suivant l'une des revendications 1 à 10, **caractérisé en ce que** les contacts mobiles (10, 11, 12, 13) sont réalisés sous forme de contacts frotteurs.

12. Dispositif suivant l'une des revendications 1 à 11, **caractérisé en ce que** les contacts fixes (1 à 6) sont disposés dans un plan, en particulier sur une plaquette à circuits imprimés.

13. Dispositif suivant l'une des revendications 1 à 12, **caractérisé en ce que** le porte-contacts (7) est pivoté d'environ 60° lors de l'alternance entre les contacts de consommateurs (3, 4 et 5, 6) des deux paires de consommateurs.

14. Dispositif suivant l'une des revendications 1 à 13, **caractérisé en ce que** le porte-contacts est coulissant dans deux directions perpendiculaires entre elles dans la position d'angle de rotation respective.
